# FASCICULE DE BREVET EUROPEEN

(11) **EP 0 842 807 B1**
(45) Date de publication et mention de la délivrance du brevet: **07.02.2001**
(21) Numéro de dépôt: 97402696.5
(22) Date de dépôt: 12.11.1997
(51) Int. Cl.: B60N 2/06

(54) **Glissière pour siège de véhicule, et siège équipé d'une telle glissière**
Fahrzeugsitzschiene und mit einer solchen Sitzschiene ausgerüsteter Sitz
Slide for a vehicle seat and seat with such a slide

(30) Priorité: 14.11.1996 FR 9613881
(43) Date de publication de la demande: 20.05.1998
(73) Titulaire: BERTRAND FAURE EQUIPEMENTS S.A., 92100 Boulogne (FR)
(72) Inventeur: Baloche, François, 61100 Flers (FR); Rohee, René, 61100 Flers (FR)
(74) Mandataire: Burbaud, Eric

(56) Documents cités:
- EP-A- 0 753 425
- DE-A- 2 437 499
- DE-A- 2 605 997
- DE-A- 3 030 725
- DE-A- 4 133 509
- FR-A- 2 380 462
- FR-A- 2 717 749

## Description

La présente invention est relative aux glissières pour sièges de véhicules et aux sièges équipés de telles glissières.

Les glissières en question sont destinées notamment à équiper les sièges avant de véhicules automobiles en vue de régler la position longitudinale de ces sièges.

Plus particulièrement, l'invention concerne une glissière pour siège de véhicule, comprenant un profilé dit "femelle", un profilé dit "mâle", emboîté dans le profilé femelle de façon à ménager entre ces deux profilés quatre chemins de billes longitudinaux, et des groupes de billes logées dans lesdits chemins pour permettre des coulissements longitudinaux relatifs entre les deux profilés, le profilé mâle présentant en section droite la forme générale d'un U étroit qui comprend, d'une part, un fond sensiblement horizontal et, d'autre part, deux ailes s'étendant chacune sensiblement verticalement depuis le fond jusqu'à un bord d'extrémité, ce bord d'extrémité étant prolongé extérieurement par des rabats qui présentent chacun une portion terminale verticale, le profilé femelle présentant en section droite la forme générale d'un U large qui comprend, d'une part, un fond sensiblement horizontal voisin des bords d'extrémité des ailes du profilé mâle et, d'autre part, deux ailes s'étendant chacune sensiblement verticalement en direction opposée des deux ailes du profilé mâle depuis le fond du profilé femelle jusqu'à un bord d'extrémité, en enveloppant le profilé mâle, le bord d'extrémité de chacune des ailes du profilé femelle étant prolongé intérieurement par une auge rentrante qui comprend un tronçon intermédiaire horizontal s'étendant à partir du bord d'extrémité de l'aile correspondante du profilé femelle, ce tronçon intermédiaire horizontal étant lui-même prolongé par une paroi rentrante qui est disposée entre l'aile et le rabat correspondants du profilé mâle, cette paroi rentrante comprenant un tronçon oblique qui s'étend en biais vers l'aile correspondante du profilé mâle et vers le bord d'extrémité de cette aile, ce tronçon oblique délimitant un premier chemin de billes avec le rabat correspondant du profilé mâle de façon que les billes de ce premier chemin de billes soient en contact avec ledit tronçon oblique et avec ledit rabat, tandis que ce rabat délimite un deuxième chemin de billes avec une zone de coin située à la jonction entre le fond du profilé femelle et l'aile correspondante de ce profilé femelle de façon que les billes de ce deuxième chemin de billes soient en contact avec ledit rabat et avec ladite zone de coin.

Le document FR-A-2 717 749 divulge une telle glissière.

Toutefois, la glissière décrite dans ce document peut, dans certaines conditions, être sujette à des coincements, notamment lorsqu'une charge de compression ou de traction est appliquée à cette glissière.

La présente invention a notamment pour but de pallier cet inconvénient.

A cet effet, selon l'invention, une glissière du genre en question est essentiellement caractérisée en ce que les billes de chaque premier chemin de billes sont en appui contre la portion terminale verticale du rabat correspondant du profilé mâle,
et en ce que le tronçon oblique de chaque auge rentrante du profilé femelle prolonge directement le tronçon horizontal de cette auge rentrante, ce tronçon oblique présentant, en section droite, un profil rectiligne.

Grâce à ces dispositions, les charges de compression appliquées verticalement entre les deux profilés donnent lieu à des flexions élastiques des rabats du profilé mâle et des tronçons obliques des auges rentrantes, ce qui évite des coincements des billes sans pour autant créer de jeux générateurs de cliquetis.

De même, les tractions appliquées verticalement entre les deux profilés donnent lieu à des flexions élastiques qui évitent le coincement des billes des premiers chemins de billes.

Par rapport à la glissière décrite dans le document susmentionné, les flexions des auges rentrantes de la glissière selon l'invention sont facilitées notamment par l'absence de tronçons intermédiaires verticaux entre les tronçons intermédiaires horizontaux et les tronçons obliques de ces auges rentrantes, ces tronçons verticaux formant des nervures relativement résistantes vis-à-vis d'une déformation verticale.

De plus, dans la glissière selon l'invention, les coincements sont également d'autant mieux évités que, par rapport à la glissière décrite dans le document susmentionné les tronçons obliques des auges rentrantes n'épousent plus, même partiellement, la forme extérieure desdites billes.

Dans tous les cas, l'invention autorise une réduction considérable, voire une annulation, de tout jeu permanent entre les deux profilés et les billes, ce qui permet tout à la fois d'obtenir une grande efficacité de guidage en coulissement et d'éviter que des bruits de cliquetis soient générés pendant le roulement du véhicule, et ce, sans coincement.

Dans des modes de réalisation préférés, on peut éventuellement avoir recours en outre à l'une et/ou à l'autre des dispositions suivantes :
- chaque rabat appartenant au profilé mâle présente un tronçon horizontal qui prolonge le bord d'extrémité de l'aile correspondante dudit profilé mâle, puis un tronçon courbe s'étendant en biais vers l'aile correspondante du profilé femelle et vers le bord d'extrémité de cette aile, ce tronçon courbe étant prolongé par la portion terminale verticale du rabat, ledit tronçon courbe présentant une face concave qui forme une gouttière disposée en regard de la zone de coin située à la jonction entre le fond du profilé femelle et l'aile correspondante de ce profilé, cette gouttière recevant les billes du deuxième chemin de billes correspondant, le tronçon courbe du rabat susmentionné présentant par ailleurs une face convexe qui est disposée en regard de l'auge rentrante correspondante du profilé femelle, les billes du premier chemin de billes présentant chacune au moins un point de contact avec ladite face convexe,
- les billes de chaque deuxième chemin de billes présentent chacune au moins un point de contact avec l'aile verticale correspondante du profilé femelle et au moins un point de contact avec une paroi horizontale appartenant au fond dudit profilé femelle,
- le tronçon oblique de chaque auge rentrante se prolonge vers le bord d'extrémité de l'aile correspondante du profilé mâle par un tronçon vertical qui est disposé au voisinage immédiat de ladite aile,
- les billes du premier chemin de billes sont plus proches du tronçon vertical de l'auge rentrante correspondante que du tronçon horizontal de cette auge rentrante, ces billes n'étant toutefois pas en contact avec ledit tronçon vertical,
- le profilé mâle est solidaire d'un profilé de renfort qui présente également en section droite la forme générale d'un U, ce profilé de renfort comportant un fond sensiblement horizontal qui est solidaire du fond du profilé mâle, deux ailes qui s'étendent sensiblement verticalement à partir de ce fond de part et d'autre des ailes du profilé femelle, et deux rabats sensiblement horizontaux qui s'engagent chacun sous une partie du fond du profilé femelle,
- le fond du profilé femelle présente une partie centrale horizontale encadrée par deux ressauts latéraux sous lesquels pénètrent respectivement les rabats du profilé de renfort,
- le fond du profilé de renfort présente deux pliures longitudinales qui forment deux nervures pénétrant chacune partiellement entre une des ailes du profilé mâle et l'auge rentrante correspondante du profilé femelle.

Par ailleurs, l'invention a également pour objet un siège de véhicule présentant une assise montée sur deux glissières telles que définies précédemment.

En particulier, lorsque le siège comprend en outre une ceinture de sécurité qui présente au moins un point de fixation solidaire dudit siège, il est avantageux que les glissières incluent un profilé de renfort tel que défini ci-dessus.

D'autres caractéristiques et avantages de l'invention apparaîtront au cours de la description détaillée suivante de deux de ces formes de réalisation, données à titre d'exemples non limitatifs, en regard des dessins joints.

Sur les dessins :
- la figure 1 est une vue schématique d'un siège de véhicule susceptible d'être équipé de glissières selon l'invention,
- la figure 2 est une vue en coupe transversale et en perspective d'une glissière selon une forme de réalisation de l'invention,
- et la figure 3 est une vue en coupe transversale d'une glissière similaire à celle de la figure 2, dotée d'un profilé de renfort.

Sur les différentes figures, les mêmes références désignent des éléments identiques ou similaires.

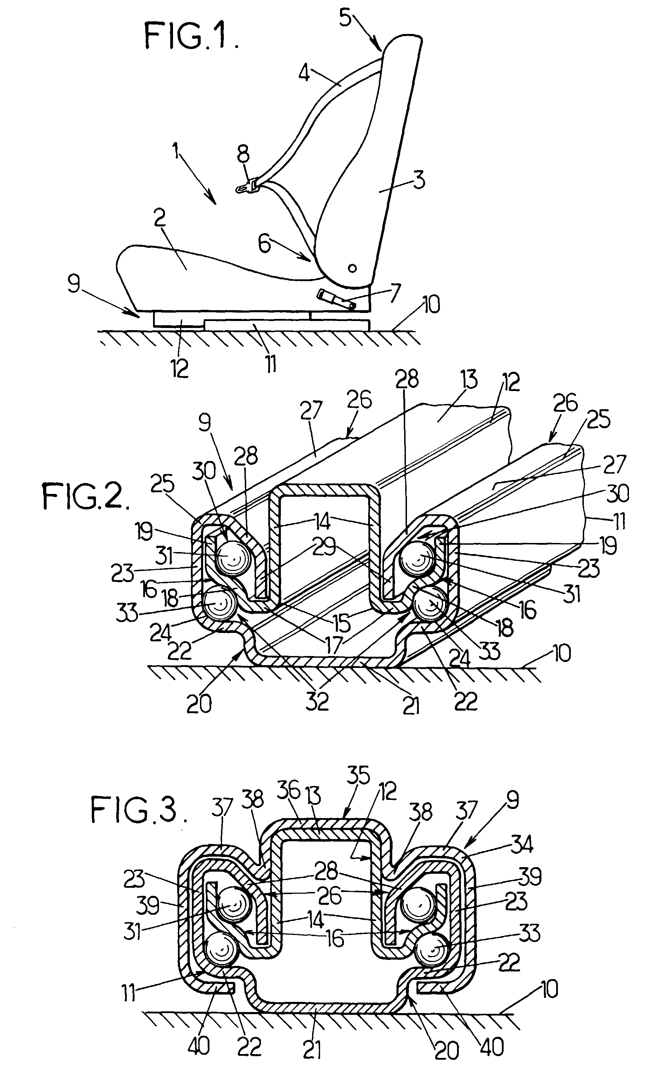

La figure 1 représente un siège avant 1 de véhicule automobile qui présente une assise 2 et un dossier 3 monté sur cette assise.

De plus, dans certains cas, le siège 1 peut comporter une ceinture de sécurité 4 dite "embarquée", c'est-à-dire dont au moins un des trois points de fixation est solidaire du siège.

Dans le cas particulier représenté sur la figure 1, la ceinture de sécurité 4 est reliée au siège 1 par ses trois points de fixation, savoir :
- un point de fixation supérieur 5, constitué généralement par un enrouleur de ceinture intégré dans le dossier 3,
- un point de fixation inférieur permanent 6, situé d'un côté de l'assise 2,
- et un point de fixation non permanent 7, situé de l'autre côté de l'assise 2 et constitué plus particulièrement par un système de verrouillage de ceinture qui coopère avec une boucle 8 coulissant le long de la ceinture de sécurité 4.

L'assise 2 du siège est montée sur le plancher 10 du véhicule par l'intermédiaire de deux glissières longitudinales 9, dont une seule est visible sur la figure 1.

Chacune de ces glissières comporte d'une part un profilé fixe 11 fixé au plancher 10, et d'autre part un profilé mobile 12 fixé à l'assise 2, le profilé mobile 12 coulissant longitudinalement sur le profilé fixe 11 et pouvant être accouplé au profilé fixe au moyen d'un mécanisme de verrouillage manuel ou au moyen d'un mécanisme de réglage motorisé, connus en soi.

L'un des deux profilés 11, 12 est un profilé mâle qui est emboîté à l'intérieur de l'autre profilé, dit profilé femelle. Dans les deux formes de réalisation de l'invention qui vont maintenant être décrites ci-après, le profilé mâle est constitué par le profilé mobile supérieur 12 tandis que le profilé femelle est constitué par le profilé fixe inférieur 11, mais il va de soi que cette disposition pourrait être inversée sans sortir du cadre de l'invention, le profilé femelle 11 constituant alors le profilé mobile supérieur et le profilé mâle 12 constituant le profilé fixe inférieur.

Dans tous les cas de figures, les deux profilés 11, 12 sont constitués chacun par une tôle pliée obtenue par tout moyen connu, par exemple par emboutissage, profilage ou extrusion.

De plus, ces profilés présentent une section droite sensiblement constante sur toute leur longueur, sous réserve bien entendu des évidements, découpes, dentures ou autres moyens de fixation ou de verrouillage qui peuvent être ménagés dans lesdits profilés ou rapportés sur ces profilés.

Dans la forme de réalisation de la figure 2, le profilé mâle 12 présente en section droite la forme générale d'un U étroit qui comprend :
- un fond plat 13 horizontal qui est fixé l'armature de l'assise 2,
- deux ailes verticales 14 qui s'étendent chacune vers le bas depuis le fond 13 jusqu'à un bord d'extrémité 15,
- et deux rabats 16 qui s'étendent chacun vers l'extérieur et vers le haut à partir du bord d'extrémité 15.

Chacun de ces rabats 16 présente, à partir du bord d'extrémité 15 :
- un court tronçon horizontal 17,
- un tronçon courbe 18 qui présente d'une part une face inférieure concave dirigée en biais, sensiblement à 45° vers l'extérieur et vers le bas, en formant une gouttière longitudinale, et d'autre part une face supérieure convexe,
- et enfin une portion terminale verticale 19.

Par ailleurs, le profilé femelle 11 comporte quant à lui :
- un fond horizontal 20 qui présente d'une part une partie centrale horizontale plate 21 fixée sur le plancher 10 du véhicule, et d'autre part deux ressauts latéraux 22 sensiblement horizontaux qui sont disposés à une certaine hauteur au-dessus du plancher 10,
- deux ailes verticales 23 qui s'étendent vers le haut à partir des deux ressauts 22 en délimitant avec ceux-ci deux coins arrondis 24 disposés en regard des faces inférieures concaves des tronçons courbes 18 susmentionnés, les deux ailes 23 s'étendant chacune jusqu'à un bord d'extrémité 25,
- et deux auges rentrantes 26 qui prolongent les bords d'extrémité 25 vers l'intérieur et vers le bas en pénétrant entre les ailes 14 et les rabats 16 du profilé mâle.

Ces auges rentrantes 26 comportent chacune, à partir du bord d'extrémité 25 :
- d'abord un court tronçon intermédiaire (27) horizontal (ensuite: tronçon horizontal) disposé à une faible distance au-dessus de la portion terminale verticale 19 du rabat 16 correspondant,
- puis un tronçon oblique 28 de section rectiligne qui s'étend en biais vers l'intérieur et vers le bas, par exemple sensiblement à 45°,
- et enfin un tronçon vertical 29 disposé au voisinage immédiat de l'aile 14 correspondante du profilé mâle et s'étendant jusqu'à proximité du tronçon horizontal 17 du rabat correspondant.

Le deux profilés 11, 12 délimitent entre eux quatre chemin de billes, savoir :
- d'une part deux premiers chemins de billes 30 qui sont délimités chacun entre une auge rentrante 26 et le rabat 16 correspondant et qui contiennent chacun un groupe de billes rigides 31, métalliques ou plastiques,
- et d'autre part deux deuxièmes chemins de billes 32 qui sont délimités chacun entre un rabat 16 et la zone de coin 24 correspondante et qui contiennent chacun un groupe de billes rigides 33, notamment métalliques, ces billes 33 étant identiques ou sensiblement identiques aux billes 31.

Chacune des billes 31 de chaque premier chemin de billes est en contact :
- avec un point du tronçon oblique 28 de l'auge rentrante correspondante, la bille 31 étant plus proche du tronçon vertical 29 que du tronçon horizontal 27, mais ladite bille 31 étant toutefois écartée du tronçon vertical 29,
- avec un point de la portion terminale verticale 19 du rabat 16 correspondant,
- et avec un point de la face convexe du tronçon courbe 18 de ce rabat, ce tronçon courbe se raccordant à la portion terminale verticale 19 avec un rayon de courbure inférieur au rayon des billes 31.

Par ailleurs, chaque bille 33 de chaque deuxième chemin de billes est en contact :
- avec la face concave du tronçon courbe 18 du rabat correspondant, les billes 33 étant ainsi en contact avec cette face concave selon au moins une ligne d'appui située au voisinage immédiat de la ligne d'appui des billes 31 correspondantes sur la face convexe du même tronçon courbe 18,
- avec au moins un point de l'aile verticale 23 correspondante, selon une direction d'appui horizontale,
- et avec au moins un point du ressaut 22 correspondant, selon une direction d'appui verticale, la zone de coin 24 présentant un rayon de courbure inférieur ou égal au rayon des billes 33.

Les billes 33 sont donc parfaitement guidées, du fait de la relativement grande rigidité des zones de coin 24.

Grâce à ces dispositions, la glissière présente une grande résistance vis-à-vis des efforts verticaux, aussi bien en compression qu'en traction, et cette glissière n'est pas sujette aux coincements, grâce aux flexions élastiques des rabats 16 et surtout des auges rentrantes 26.

Par ailleurs, afin d'augmenter encore la résistance de la glissière selon l'invention vis-à-vis des efforts verticaux de traction, et notamment lorsque le siège 1 monté sur de telles glissières comporte une ceinture "embarquée" et il peut être avantageux d'ajouter à la glissière un profilé métallique de renfort 34, le reste de la glissière restant inchangé par rapport à ce qui a été décrit ci-dessus.

Comme représenté sur la figure 3, le profilé de renfort 34 présente en section droite la forme générale d'un U et comporte :
- un fond 35 sensiblement horizontal qui est solidarisé avec le fond du profilé mâle par tout moyen connu (boulons, soudure, etc.), ce fond présentant une partie centrale 36 disposée au contact du fond 13 du profilé mâle et deux portions latérales 37 disposées avec un faible jeu au-dessus des auges rentrantes 26 du profilé femelle, la partie centrale 36 étant séparée des portions latérales 37 par deux pliures longitudinales 38 qui forment deux nervures en forme de V pénétrant entre les auges rentrantes et les ailes 14 du profilé mâle, ces nervures étant en contact avec lesdites ailes 14 et étant séparées des tronçons obliques 28 des auges rentrantes par un faible jeu,
- deux ailes verticales 39 qui prolongent les portions latérales 37 du fond 36 vers le bas de part et d'autre du profilé femelle 11,
- et deux rabats horizontaux 40 qui pénètrent chacun sous l'un des ressauts 22 du fond du profilé femelle.

## Revendications

1. Glissière pour siège de véhicule, comprenant un profilé dit "femelle" (11), un profilé dit "mâle" (12), emboîté dans le profilé femelle de façon à ménager entre ces deux profilés quatre chemins de billes longitudinaux (30, 32), et des groupes de billes (31, 33) logées dans lesdits chemins pour permettre des coulissements longitudinaux relatifs entre les deux profilés, le profilé mâle (12) présentant en section droite la forme générale d'un U étroit qui comprend, d'une part, un fond (13) sensiblement horizontal et, d'autre part, deux ailes (14) s'étendant chacune sensiblement verticalement depuis le fond jusqu'à un bord d'extrémité (15), ce bord d'extrémité étant prolongé extérieurement par des rabats (16) qui présentent chacun une portion terminale verticale (19), le profilé femelle (11) présentant en section droite la forme générale d'un U large qui comprend, d'une part, un fond (20) sensiblement horizontal voisin des bords d'extrémité (15) des ailes du profilé mâle et, d'autre part, deux ailes (23) s'étendant chacune sensiblement verticalement en direction opposée des deux ailes (14) du profilé mâle depuis le fond (20) du profilé femelle jusqu'à un bord d'extrémité (25), en enveloppant le profilé mâle (12), le bord d'extrémité (25) de chacune des ailes du profilé femelle étant prolongé intérieurement par une auge rentrante (26) qui comprend un tronçon intermédiaire (27) horizontal s'étendant à partir du bord d'extrémité de l'aile correspondante du profilé femelle, ce tronçon intermédiaire horizontal étant lui-même prolongé par une paroi rentrante (28, 29) qui est disposée entre l'aile (14) et le rabat correspondants du profilé mâle, cette paroi rentrante comprenant un tronçon oblique (28) qui s'étend en biais vers l'aile (14) correspondante du profilé mâle et vers le bord d'extrémité (15) de cette aile, ce tronçon oblique délimitant un premier chemin de billes (30) avec le rabat correspondant (16) du profilé mâle de façon que les billes (31) de ce premier chemin de billes soient en contact avec ledit tronçon oblique et avec ledit rabat, tandis que ce rabat (16) délimite un deuxième chemin de billes (32) avec une zone de coin (24) située à la jonction entre le fond (20) du profilé femelle et l'aile correspondante (23) de ce profilé femelle de façon que les billes (33) de ce deuxième chemin de billes soient en contact avec ledit rabat et avec ladite zone de coin,
**caractérisée en ce que** les billes (31) de chaque premier chemin de billes sont en appui contre la portion terminale verticale (19) du rabat correspondant du profilé mâle,
**et en ce que** le tronçon oblique (28) de chaque auge rentrante du profilé femelle prolonge directement le tronçon intermédiaire (27) horizontal de cette auge rentrante, ce tronçon oblique présentant, en section droite, un profil rectiligne.

2. Glissière selon la revendication 1, dans laquelle chaque rabat (16) appartenant au profilé mâle présente un tronçon horizontal (17) qui prolonge le bord d'extrémité (15) de l'aile correspondante dudit profilé mâle, puis un tronçon courbe (18) s'étendant en biais vers l'aile (23) correspondante du profilé femelle et vers le bord d'extrémité (25) de cette aile, ce tronçon courbe (18) étant prolongé par la portion terminale verticale (19) du rabat (16), ledit tronçon courbe (18) présentant une face concave qui forme une gouttière disposée en regard de la zone de coin située à la jonction entre le fond du profilé femelle et l'aile correspondante de ce profilé, cette gouttière recevant les billes (33) du deuxième chemin de billes correspondant, le tronçon courbe (18) du rabat susmentionné présentant par ailleurs une face convexe qui est disposée en regard de l'auge rentrante (26) correspondante du profilé femelle, les billes (33) du premier chemin de billes présentant chacune au moins un point de contact avec ladite face convexe.

3. Glissière selon l'une quelconque des revendications 1 et 2, dans laquelle les billes (33) de chaque deuxième chemin de billes présentent chacune au moins un point de contact avec l'aile verticale (23) correspondante du profilé femelle et au moins un point de contact avec une paroi horizontale (22) appartenant au fond dudit profilé femelle.

4. Glissière selon l'une quelconque des revendications précédentes, dans laquelle le tronçon oblique (28) de chaque auge rentrante se prolonge vers le bord d'extrémité (15) de l'aile correspondante du profilé mâle par un tronçon vertical (29) qui est disposé au voisinage immédiat de ladite aile.

5. Glissière selon la revendication 4, dans laquelle les billes (31) du premier chemin de billes sont plus proches du tronçon vertical (29) de l'auge rentrante correspondante que du tronçon intermédiaire (27) horizontal de cette auge rentrante, ces billes n'étant toutefois pas en contact avec ledit tronçon vertical.

6. Glissière selon l'une quelconque des revendications précédentes, dans laquelle le profilé mâle (12) est solidaire d'un profilé de renfort (34) qui présente également en section droite la forme générale d'un U, ce profilé de renfort comportant un fond (35) sensiblement horizontal qui est solidaire du fond (13) du profilé mâle, deux ailes (39) qui s'étendent sensiblement verticalement à partir de ce fond (35) de part et d'autre des ailes (23) du profilé femelle, et deux rabats (40) sensiblement horizontaux qui s'engagent chacun sous une partie du fond (20) du profilé femelle.

7. Glissière selon la revendication 6, dans laquelle le fond (20) du profilé femelle présente une partie centrale horizontale (21) encadrée par deux ressauts (22) latéraux sous lesquels pénètrent respectivement les rabats (40) du profilé de renfort.

8. Glissière selon l'une quelconque des revendidations 6 et 7, dans laquelle le fond (35) du profilé de renfort présente deux pliures longitudinales (38) qui forment deux nervures pénétrant chacune partiellement entre une des ailes (14) du profilé mâle et l'auge rentrante (26) correspondante du profilé femelle.

9. Siège de véhicule présentant une assise (2) montée sur deux glissières (9) selon l'une quelconque des revendications précédentes.

10. Siège de véhicule présentant une assise (2) montée sur deux glissières (9) selon l'une quelconque des revendications 6 à 8, ce siège comprenant en outre une ceinture de sécurité (4) qui présente au moins un point de fixation (5, 6, 7) solidaire dudit siège.

## Patentansprüche

1. Gleitschiene für einen Fahrzeugsitz, mit einem sogenannten "Aufnahme"-Profilteil (11), mit einem sogenannten "Einführ"-Profilteil (12), das in das Aufnahme-Profilteil derart eingefügt ist, daß zwischen diesen beiden Profilteilen vier Längsbahnen (30, 32) für Kugeln ausgebildet sind, und mit Gruppen von Kugeln (31, 33), die in diese Bahnen eingesetzt sind, um Gleitbewegungen dieser beiden Profilteile in Längsrichtung zueinander zu ermöglichen, wobei das Einführ-Profilteil (12) im Querschnitt die allgemeine Form eines engen U aufweist, das einerseits einen im wesentlichen waagrechten Boden (13) und andererseits zwei Schenkel (14) aufweist, die sich je im wesentlichen senkrecht vom Boden bis zu einem Endrand (15) erstrecken, wobei dieser Endrand nach außen durch Umschläge (16) verlängert wird, die je einen senkrechten Endabschnitt (19) aufweisen, wobei das Aufnahme-Profilteil (11) im Querschnitt die allgemeine Form eines weiten U aufweist, das einerseits einen im wesentlichen waagrechten Boden (20), der den Endrändern (15) der Schenkel des Einführ-Profilteils benachbart ist, und andererseits zwei Schenkel (23) aufweist, die sich je in entgegengesetzter Richtung zu den beiden Schenkeln (14) des Einführ-Profilteils vom Boden (20) des Aufnahme-Profilteils bis zu einem Endrand (25) im wesentlichen senkrecht erstrecken, wobei sie das Einführ-Profilteil (12) umgeben, wobei der Endrand (25) jedes der Schenkel des Aufnahme-Profilteils nach innen durch eine einspringende Wanne (26) verlängert wird, die einen waagrechten Zwischenabschnitt (27) aufweist, der sich ausgehend vom Endrand des entsprechenden Schenkels des Aufnahme-Profilteils erstreckt, wobei dieser waagrechte Zwischenabschnitt selbst durch eine einspringende Wand (28, 29) verlängert wird, die zwischen dem Schenkel (14) und dem entsprechenden Umschlag des Einführ-Profilteils angeordnet ist, wobei diese einspringende Wand einen schrägen Abschnitt (28) aufweist, der sich schräg in Richtung des entsprechenden Schenkels (14) des Einführ-Profilteils und des Endrands (15) dieses Schenkels erstreckt, wobei dieser schräge Abschnitt mit dem entsprechenden Umschlag (16) des Einführ-Profilteils eine erste Bahn (30) für Kugeln bildet, derart, daß die Kugeln (31) dieser ersten Kugelbahn mit dem schrägen Abschnitt und dem Umschlag in Kontakt stehen, während dieser Umschlag (16) eine zweite Kugelbahn (32) mit einer Eckzone (24) begrenzt, die sich an der Verbindungsstelle zwischen dem Boden (20) des Aufnahme-Profilteils und dem entsprechenden Schenkel (23) dieses Aufnahme-Profilteils befindet, so daß die Kugeln (33) dieser zweiten Kugelbahn mit dem Umschlag und der Eckzone in Kontakt stehen,
dadurch gekennzeichnet, daß die Kugeln (31) jeder ersten Kugelbahn gegen den senkrechten Endabschnitt (19) des entsprechenden Umschlags des Einführ-Profilteils anliegen,
und daß der schräge Abschnitt (28) jeder einspringenden Wanne des Aufnahme-Profilteils direkt den waagrechten Zwischenabschnitt (27) dieser einspringenden Wanne verlängert, wobei dieser schräge Abschnitt im Querschnitt ein geradliniges Profil aufweist.

2. Gleitschiene nach Anspruch 1, bei der jeder zum Einführ-Profilteil gehörende Umschlag (16) einen waagrechten Abschnitt (17), der den Endrand (15) des entsprechenden Schenkels des Einführ-Profilteils verlängert, und dann einen gekrümmten Abschnitt (18) aufweist, der sich schräg in Richtung des entsprechenden Schenkels (23) des Aufnahme-Profilteils und des Endrands (25) dieses Schenkels erstreckt, wobei dieser gekrümmte Abschnitt (18) durch den senkrechten Endabschnitt (19) des Umschlags (16) verlängert wird, wobei der gekrümmte Abschnitt (18) eine konkave Seite aufweist, die eine Rinne bildet, welche gegenüber der Eckzone angeordnet ist, die sich an der Verbindungsstelle zwischen dem Boden des Aufnahme-Profilteils und dem entsprechenden Schenkel dieses Profilteils befindet, wobei diese Rinne die Kugeln (33) der entsprechenden zweiten Kugelbahn aufnimmt, wobei der gekrümmte Abschnitt (18) des erwähnten Umschlags außerdem eine konvexe Seite aufweist, die gegenüber der entsprechenden einspringenden Wanne (26) des Aufnahme-Profilteils angeordnet ist, wobei die Kugeln (31) der ersten Kugelbahn je mindestens einen Kontaktpunkt mit der konvexen Seite aufweisen.

3. Gleitschiene nach einem der Ansprüche 1 und 2, bei der die Kugeln (33) jeder zweiten Kugelbahn je mindestens einen Kontaktpunkt mit dem entsprechenden senkrechten Schenkel (23) des Aufnahme-Profilteils und mindestens einen Kontaktpunkt mit der waagrechten Wand (22) aufweisen, die zum Boden des Aufnahme-Profilteils gehört.

4. Gleitschiene nach einem der vorhergehenden Ansprüche, bei der der schräge Abschnitt (28) jeder einspringenden Wanne zum Endrand (15) des entsprechenden Schenkels des Einführ-Profilteils hin durch einen senkrechten Abschnitt (29) verlängert wird, der in der direkten Nähe des Schenkels angeordnet ist.

5. Gleitschiene nach Anspruch 4, bei der die Kugeln (31) der ersten Kugelbahn näher am senkrechten Abschnitt (29) der entsprechenden einspringenden Wanne als am waagrechten Zwischenabschnitt (27) dieser einspringenden Wanne liegen, wobei diese Kugeln aber nicht mit dem senkrechten Abschnitt in Kontakt stehen.

6. Gleitschiene nach einem der vorhergehenden Ansprüche, bei der das Einführ-Profilteil (12) fest mit einem Verstärkungsprofilteil (34) verbunden ist, das auch im Querschnitt die allgemeine Form eines U aufweist, wobei dieses Verstärkungsprofilteil einen im wesentlichen waagrechten Boden (35), der mit dem Boden (13) des Einführ-Profilteils fest verbunden ist, zwei Schenkel (39), die sich ausgehend von diesem Boden (35) zu beiden Seiten der Schenkel (23) des Aufnahme-Profilteils im wesentlichen senkrecht erstrecken, und zwei Umschläge (40) aufweist, die sich je unter einen Teil des Bodens (20) des Aufnahme-Profilteils einfügen.

7. Gleitschiene nach Anspruch 6, bei der der Boden (20) des Aufnahme-Profilteils einen waagrechten zentralen Bereich (21) aufweist, der von zwei seitlichen Absätzen (22) eingerahmt wird, unter die die Umschläge (40) des Verstärkungsprofilteils eindringen.

8. Gleitschiene nach einem der Ansprüche 6 und 7, bei der der Boden (35) des Verstärkungsprofilteils zwei Längsfalten (38) aufweist, die zwei Rippen bilden, welche je teilweise zwischen einen der Schenkel (14) des Einführ-Profilteils und die entsprechende einspringende Wanne (26) des Einführ-Profilteils eindringen.

9. Fahrzeugsitz mit einer Sitzfläche (2), die auf zwei Gleitschienen (9) nach einem der vorhergehenden Ansprüche montiert ist.

10. Fahrzeugsitz mit einer Sitzfläche (2), die auf zwei Gleitschienen (9) nach einem der Ansprüche 6 bis 8 montiert ist, wobei dieser Sitz außerdem einen Sicherheitsgurt (4) aufweist, der mindestens einen fest mit dem Sitz verbundenen Befestigungspunkt (5, 6, 7) besitzt.

## Claims

1. A slideway for a vehicle seat, the slideway comprising a "female" section member (11), a "male" section member (12) engaged in the female section member in such a manner as to leave four longitudinal ball races (30, 32) between the two section members and groups of balls (31, 33) received in said races to enable relative longitudinal sliding between the two section members, the right section of the male section member (12) being generally in the form of a narrow channel comprising, firstly, a substantially horizontal web (13) and secondly two flanges (14) each extending substantially vertically from the web to an end edge (15), said end edge being extended outwardly by flaps (16) each having a vertical end portion (19), the right section of the female section member (11) being generally in the form of a wide channel and comprising, firstly a substantially horizontal web (20) adjacent the end edges (15) of the flanges of the male section member, and secondly two flanges (23) each extending substantially vertically in the opposite direction to the two flanges (14) of the male section member from the web (20) of the female section member to respective end edges (25), thereby enveloping the male section member (12), the end edge (25) of each of the flanges of the female section member being extended inwards by a reentrant trough (26) comprising an intermediate horizontal length (27) extending from the end edge of the corresponding flange of the female section member, said intermediate horizontal length itself being extended by a reentrant wall (28, 29) disposed between the corresponding flange (14) and flap of the male section member, said reentrant wall comprising a sloping length (28) which extends at an angle towards the corresponding flange (14) of the male section member and towards the end edge (15) of said flange, said sloping length co-operating with the corresponding flap (16) of the male section member to define a first ball race (30) such that the balls (31) of this ball race are in contact with said sloping length and with said flap, whereas said flap (16) also cooperates with a corner zone (24) situated at the junction between the web (20) of the female section member and the corresponding flange (23) of said female section member to define a second ball race (32) in such a manner that the balls (33) in the second ball race are in contact with said flap and with said corner zone,
characterized in that the balls (31) of each first ball race press against the vertical end portion (19) of the corresponding flap of the male section member; and
in that the sloping length (28) of each reentrant trough of the female section member directly extends the intermediate horizontal length (27) of said reentrant trough, the sloping length having a right section that is rectilinear in shape.

2. A slideway according to claim 1, in which each flap (16) belonging to the male section member has a horizontal length (17) which extends the end edge (15) of the corresponding flange of said male section member, followed by a curved length (18) which extends at an angle towards the corresponding flange (23) of the female section member and towards the end edge (25) of said flange, said curved length (18) being extended by the vertical end portion (19) of the flap (16), said curved length (18) having a concave face which forms a gutter facing the corner zone situated at the junction between the web of the female section member and the corresponding flange of said section member, said gutter receiving the balls (33) of the corresponding section ball race, the curved length (18) of the above-mentioned flap also having a convex face disposed facing the corresponding reentrant trough (26) of the female section member, each of the balls (33) of the first ball race having at least one point of contact with said convex face.

3. A slideway according to claim 1 or 2, in which each ball (33) of each second ball race presents at least one point of contact with the corresponding vertical flange (23) of the female section member, and at least one point of contact with a horizontal wall (22) belonging to the web of said female section member.

4. A slideway according to any preceding claim, in which the sloping length (28) of each reentrant trough is extended towards the end edge (15) of the corresponding flange of the male section member by a vertical length (29) which is disposed in the immediate vicinity of said flange.

5. A slideway according to claim 4, in which the balls (31) of the first ball race are closer to the vertical length (29) of the corresponding reentrant trough than to the intermediate horizontal length (27) of said reentrant trough, the balls nevertheless not coming into contact with said vertical length.

6. A slideway according to any preceding claim, in which the male section member (12) is secured to a reinforcing section member (34) likewise having a right section that is generally channel-shaped, said reinforcing section member comprising a substantially horizontal web (35) secured to the web (13) of the male section member, two flanges (39) which extend substantially vertically from said web (35) on either side of the flanges (23) of the female section member, and two substantially horizontal lips (40) each of which is engaged beneath a portion of the web (20) of the female section member.

7. A slideway according to claim 6, in which the web (20) of the female section member has a horizontal central portion (21) between two lateral jutting strips (22) beneath which the respective lips (40) of the reinforcing section member penetrate.

8. A slideway according to claim 6 or 7, in which the web (35) of the reinforcing section member has two longitudinal folds (38) forming two ribs each penetrating in part between one of the flanges (14) of the male section member and the corresponding reentrant trough (26) of the female section member.

9. A vehicle seat having a seat proper (2) mounted on two slideways (9) according to any preceding claim.

10. A vehicle seat having a seat proper (2) mounted on two slideways (9) according to any one of claims 6 to 8, said seat further including a seat belt (4) having at least one anchor point (5, 6, 7) secured to said seat.
